# EUROPEAN PATENT APPLICATION

(11) **EP 1 775 668 A1**
(43) Date of publication of application: **18.04.2007**
(21) Application number: 06020974.9
(22) Date of filing: 05.10.2006
(51) Int. Cl.: G06F 21/00, H04L 12/28, H04Q 7/00

(54) **Navigation system and license acquisition and management**

(30) Priority: 05.10.2005 JP 2005291997
(71) Applicant: Xanavi Informatics Corporation, Zama-shi, Kanagawa 228-0012 (JP)
(72) Inventor: Sekiguchi, Takaaki c/o Hitachi Ltd, Chiyoda-ku Tokyo 100-8220 (JP); Kato, Hiromitsu c/o Hitachi Ltd, Chiyoda-ku Tokyo 100-8220 (JP)
(74) Representative: Strehl Schübel-Hopf & Partner

(57) **Abstract**

A license management device receives a license issued by a license issuing device. The license management device transmits the received license to a navigation system for receiving the license, and stores the received license in a memory device. When the license to be acquired cannot be acquired, the navigation system requests the license issuing device to send the license. The license management device reads the license from the memory device, and transmits the license to the navigation system.

## Description

### Background of the Invention

The present invention relates generally to license management of digital contents.

A navigation system generally provides a user with information by combining a searched route or the like with map data. Examples of a memory device which stores the map data include a CD (Compact Disc), DVD (Digital Versatile Disk), and HDD (Hard Disk Drive). Of the examples, the HDD is easy to write to, so that digital contents, such as music, moving pictures, and still pictures, in addition to map data may be stored in the HDD. Digital contents stored in a memory device may be output using output devices, such as a navigation system display and a speaker.

To prevent distribution of illegal copies of digital contents, various digital rights management (hereinafter DRM) techniques are adopted. As an example of the DRM, in purchasing music content online over a communication network, the content is encrypted for distribution, and a decryption key is included in information called a license and is given to legitimate purchasers. A license includes information operated upon to be valid only in a specific player, and is generated by an exclusive license issuing device using information unique to the specific player.

While such DRM can prevent unlimited distribution of copies of the content, it does not allow even a legitimate purchaser to use the content if the purchaser loses the license for some reason. The license may be lost by, for example, a failure in reception of the license due to abnormal termination of a communication process at the time of purchasing the license. When the license is lost, the user must pay once again to re-purchase the license. This forces unreasonable payment on the user.

A scheme which does not compel a user to make double payment upon failure of receiving a license is disclosed in Japanese Patent Laid-Open Publication No. 2002-99509. The scheme in Japanese Patent Laid-Open Publication No. 2002-99509 describes automatically reconnecting a circuit when the circuit is disconnected during transmission/reception of a license, to continue the transmission/reception of the license. According to the disclosed scheme, communication history when a circuit is disconnected is recorded in both a player and a license issuing device, and both records are compared with each other at the time of reconnection to determine from which step the transmission/reception process should be resumed.

Even with the DRM adapted to a navigation system, a license for content may be lost due to a communication failure, damage to the navigation system, or the like.

For example, once a vehicle having a navigation system installed therein moves out of an area in which communication is possible, such as a hot spot, it is unknown when the communication will next become possible. When the navigation system is powered off by, for example, stopping the vehicle engine, communication cannot be established until the engine is activated again. Communication disconnection or the like may frequently occur when a vehicle is traveling in a mountainous area or the like. In this way, a navigation system is more likely to suffer communication disconnection over a long period of time and frequent communication disconnection, as compared with purchasing content with a cellular phone, a PC (Personal Computer), or the like.

Because of the likely occurrence of communication disconnection over a long period of time and frequent communication disconnection with the use of a navigation system, if the scheme disclosed in Japanese Patent Laid-Open Publication No. 2002-99509 is adapted to the navigation system, burden due to recording volume and time required for the process of referring to multiple communication histories may be greater than for cases in which content is purchased by cellular phone, PC (Personal Computer), or the like.

### Summary of the Invention

Accordingly, it is an object of the present invention to provide a system and a method in which a financial burden is not forced on a user due to failure in license reception at the time of issuing the license for content to be used in a navigation system, and with which load on a license issuing device can be reduced.

To achieve the object, according to the present invention, a license management device receives a license issued by a license issuing device. The license management device transmits the received license to a navigation system that receives the license, and stores the received license in a memory device. When a license to be acquired cannot be acquired, the navigation system requests the license issuing device to send a license. The license management device reads the license from the memory device, and transmits the license to the navigation system.

According to the present invention, a navigation system is connected over a communication network to a license issuing device which issues a license for content in response to a license request, and a license management device, which, when a license requested is not stored in memory means, transfers the license request to the license issuing device and stores a license, sent in response to the license request, into the memory means, and when the license requested is stored in the memory means, reads and transmits the license. The navigation system comprises license request means which transmits the license request to the license management device; a license acquired status memory means; license reception means which receives the license sent from the license management device; and license acquired status storage means which stores information indicating whether the license has been received in the license acquired status memory means or not, wherein when information read from the acquired status memory means indicates that the license is not received, the license request is resent to the license management device.

According to the present invention, the license management device transfers an issued license to the navigation system, and stores the license in the memory device, so that the license issuing device need not store communication histories or need not perform a process of referring to the communication histories. Because the license management device merely performs a process of transmitting the stored license when requested by the navigation system, burden due to memory volume and operation processes, can be reduced. Because no charge is made when transmitting a license stored in the license management device, a fincancial burden is not forced on a user due to failure in license reception with the navigation system.

### Brief Description of the Drawings

Fig. 1 is a diagram showing an example of a system configuration according to one embodiment of the present invention;
Fig. 2 is a diagram showing a configuration example of a license management device according to a first embodiment of the present invention;
Fig. 3 is a diagram showing an example of a license management table according to the first embodiment;
Fig. 4 is a diagram showing a configuration example of an on-board information device according to the first embodiment;
Fig. 5 is a diagram showing an example of a content management table according to the first embodiment;
Fig. 6 is a diagram showing an example of a sequence up to acquisition of a license according to the first embodiment;
Fig. 7 is a diagram showing an operational example of the on-board information device according to the first embodiment;
Fig. 8 is a diagram showing an example of a license request according to the first embodiment;
Fig. 9 is a diagram showing an operational example of the on-board information device according to the first embodiment;
Fig. 10 is a diagram showing an operational example of the license management device according to the first embodiment;
Fig. 11 is a diagram showing a configuration example of a license issuing device according to a second embodiment;
Fig. 12 is a diagram showing a configuration example of a license management device according to the second embodiment;
Fig. 13 is a diagram showing an example of a license management table according to the second embodiment;
Fig. 14 is a diagram showing an operational example of the license management device according to the second embodiment;
Fig. 15 is a diagram showing a screen example according to the second embodiment;
Fig. 16 is a diagram showing an operational example of the license management device according to the second embodiment;
Fig. 17 is a diagram showing an example of a license request according to the second embodiment;
Fig. 18 is a diagram showing an operational example of the license issuing device according to the second embodiment;
Fig. 19 is a diagram showing a configuration example of a license management device according to a third embodiment;
Fig. 20 is a diagram showing an example of a license management table according to the third embodiment;
Fig. 21 is a diagram showing a configuration example of an on-board information device according to the third embodiment;
Fig. 22 is a diagram showing a screen example according to the third embodiment;
Fig. 23 is a diagram showing a screen example according to the third embodiment;
Fig. 24 is a diagram showing an operational example of the on-board information device according to the third embodiment;
Fig. 25 is a diagram showing an example of a transition registration request according to the third embodiment;
Fig. 26 is a diagram showing an operational example of the license management device according to the third embodiment; and
Fig. 27 is a diagram showing an operational example of the license management device according to the third embodiment.

### Detailed Description of the Preferred Embodiments

Preferred embodiments of the present invention will be described in detail below referring to the accompanying drawings. Contents to be explained below are not particularly limited, and may, for example, include an arbitrary program, piece of music, still image, moving picture, or the like. First Embodiment

### A first embodiment will now be described.

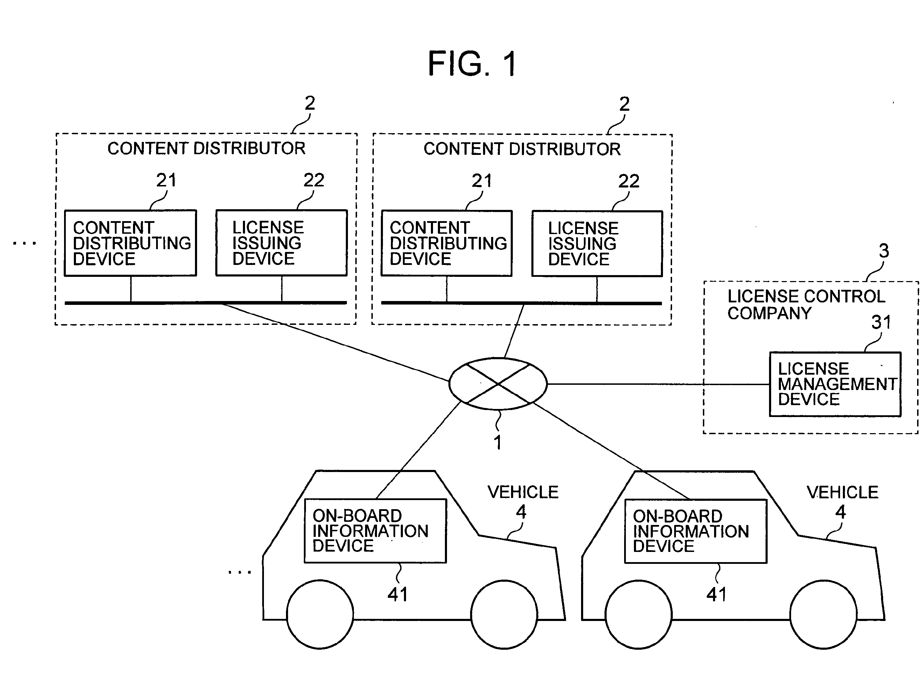

Fig. 1 is a diagram showing an example of a system configuration according to the first embodiment. Referring to Fig. 1, the license management system includes a communication network 1, content distribution devices 21 and license issuing devices 22 which are provided by respective content distributors 2, a license management device 31 which is provided by a clearinghouse 3, and on-board information devices 41 each of which is mounted on a vehicle 4. The content distribution devices 21, the license issuing devices 22, the license management device 31, and the on-board information devices 41 are mutually connected over the communication network 1.

The communication network 1 is, for example, the Internet. A content distribution device 21, which is, for example, an information processing apparatus, performs transmission of requested content. The license issuing device 22, which is, for example, an information processing apparatus, issues a license for the content and transmits the license in response to the request. The license management device 31, which is, for example, an information processing apparatus, stores the license sent from the license issuing device 22 into a memory device and transmits the license to the on-board information device 41. The on-board information device 41, which is, for example, a navigation system connectable to the communication network 1, requests a license.

Next, configuration examples of the license management device 31 and the on-board information device 41 will be described. Since the content distribution device 21 and the license issuing device 22 used are of ordinary types, details thereof will be omitted.

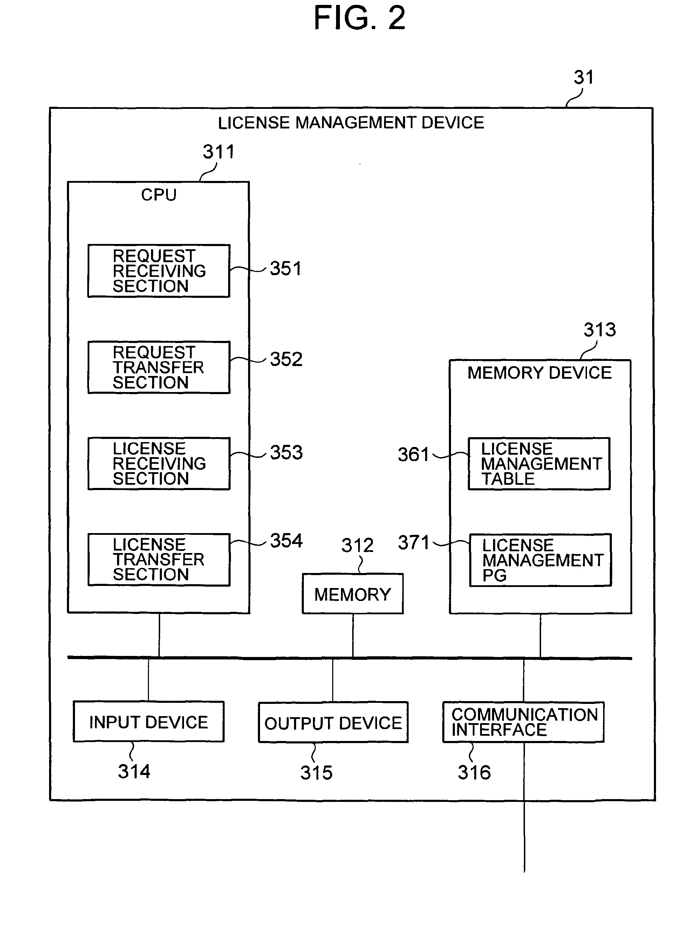

Fig. 2 is a diagram showing a configuration example of the license management device 31. Referring to Fig. 2, the license management device 31 has a CPU 311, a memory 312, a memory device 313, an input device 314, an output device 315, and a communication interface 316.

The memory device 313 is a HDD, or a writable and readable storage medium, such as a CD-R or DVD-RAM, and a storage medium drive unit. A license management program (hereinafter PG) 371, a license management table 361, and the like, are stored in the memory device 313. The license management table 361 stores a license or the like transmitted from the license issuing device 22.

The input device 314 is, for example, a keyboard, a scanner, a mouse, or the like. The output device 315 is, for example, a display, a printer, a speaker, or the like. The license management device 31 is connected to the communication network 1 via the communication interface 316.

The CPU 311 executes the license management PG 371 loaded into the memory 312 to realize a request receiving section 351, a request transfer section 352, a license receiving section 353 and a license transfer section 354. The request receiving section 351 receives a license acquire request from the on-board information device 41. The request transfer section 352 transfers the received license acquire request to the license issuing device 22. The license receiving section 353 receives a license transmitted from the license issuing device 22 and stores the license in the license management table 361. The license transfer section 354 transfers the received license to the on-board information device 41.

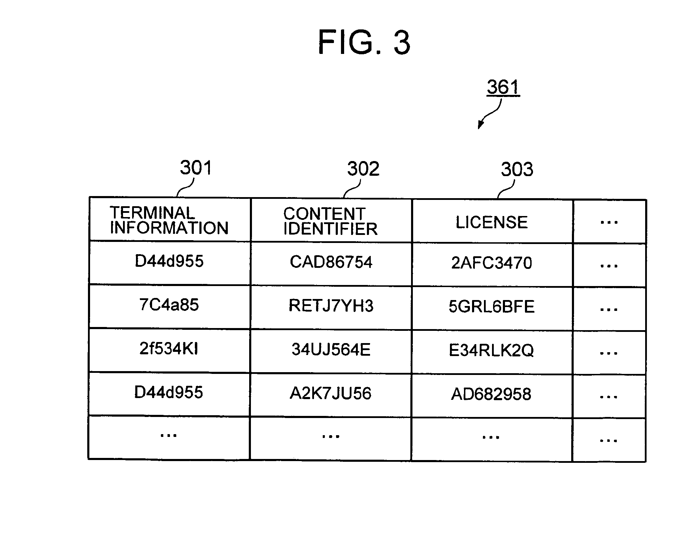

The license management table 361 will now be described. Fig. 3 shows an example of the license management table 361. Referring to Fig. 3, the license management table 361 stores terminal information 301, a content identifier 302, a license 303, and so forth. The terminal information 301, the content identifier 302, the license 303, and the like, are associated with one another. The terminal information 301 is unique to each on-board information device 41. The content identifier 302 is identification information on content requested by the on-board information device 41 specified by the corresponding terminal information 301. The license 303 allows the on-board information device 41 specified by the corresponding terminal information 301 to use the content identified by the corresponding content identifier 302.

In the embodiment, information in the license management table 361 is stored by an operation to be described later.

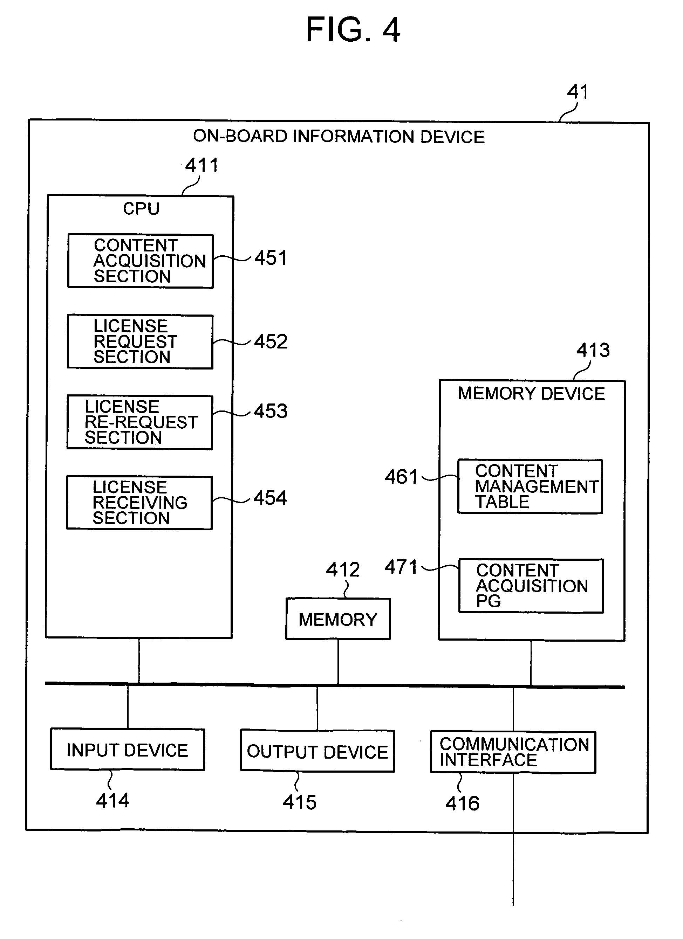

Fig. 4 is a diagram showing a configuration example of the on-board information device 41. Referring to Fig. 4, the on-board information device 41 has a CPU 411, a memory 412, a memory device 413, an input device 414, an output device 415, and a communication interface 416.

The memory device 413 is a HDD, or a writable and readable storage medium, such as a CD-R or DVD-RAM, and a storage medium drive unit. A content acquisition PG 471, a content management table 461, and the like, are stored in the memory device 413. The content management table 461 stores information indicating whether a requested license is acquired or not. Though not illustrated, the memory device 413 stores terminal information unique to the on-board information device 41. The terminal information is pre-stored at the time, for example, of product shipment or selling products.

The input device 414 is, for example, a button, a remote controller and a remote control receiving unit, a touch panel, a microphone or the like. The output device 415 is, for example, a display, a speaker or the like. The on-board information device 41 is connected to the communication network 1 via the communication interface 416.

The CPU 411 executes the content acquisition PG 471 loaded into the memory 412 to realize a content acquisition section 451, a license request section 452, a license re-request section 453 and a license receiving section 454. The content acquisition section 451 acquires content from the content distribution device 21. The license request section 452 requests the license management device 31 for a license. The license re-request section 453 resends a license request when there is a license whose reception has failed. The license receiving section 454 receives the license from the license management device 31.

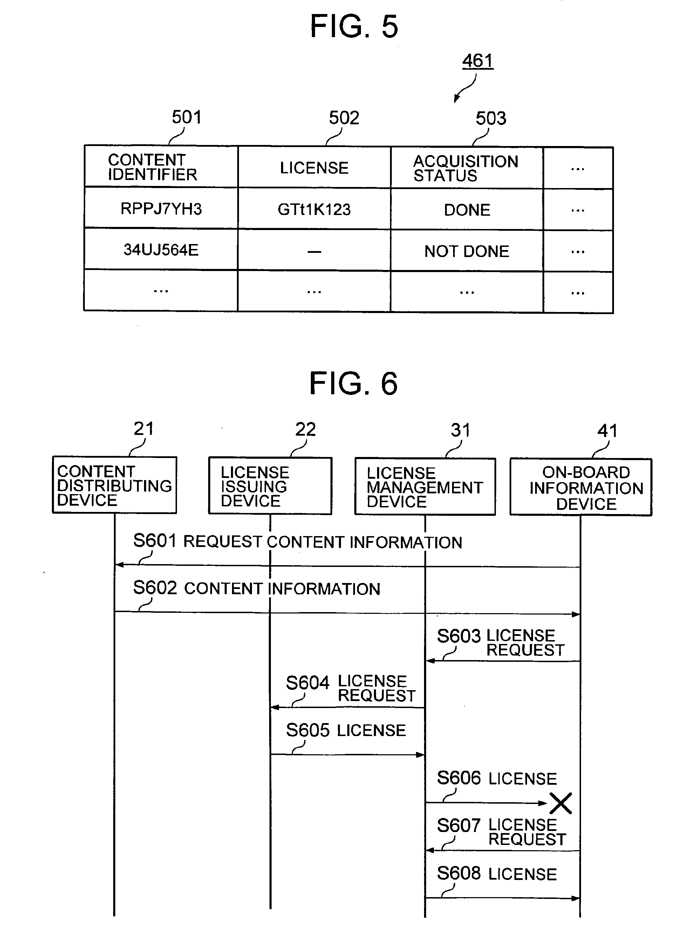

The content management table 461 will now be described. Fig. 5 shows an example of the content management table 461. Referring to Fig. 5, the content management table 461 stores a content identifier 501, a license 502, an acquisition status 503, and so forth. The content identifier 501, the license 502, the acquisition status 503, and the like, are associated with one another. The content identifier 501 is identification information on content requested by the on-board information device 41. The license 502 allows the on-board information device 41 specified by the corresponding content identifier 501 to use the content identified by the corresponding content identifier 501. The acquisition status 503 is information indicating whether the license specified by the corresponding content identifier 501 has been acquired or not. In the example of Fig. 5, "done" indicates that a license has been acquired, and "not done" indicates that acquisition of a license is not completed due to the on-board information device 41 going outside an area in which communication is possible.

Information in the content management table 461 is stored by an operation to be described later.

Though not illustrated, the on-board information device 41 has an angular speed sensor, a direction sensor, a vehicle speed sensor, and so forth. The outputs from the angular speed sensor, the direction sensor, and the like, are converted by an AD converter, or the like (not shown), and are input to the CPU 411, or the like. The output from the vehicle speed sensor is counted by a counter, or the like (not shown), whose output is input to the CPU 411, and the like,. The memory device 413 has map data stored therein. The CPU 411 has a current position calculating function of calculating the current position of the vehicle 4 from the bearing of the vehicle 4 acquired from the outputs of the angular speed sensor and the direction sensor, the vehicle speed of the vehicle 4 acquired from the output of the vehicle speed sensor, and map data or the like. Because the function is the same as that of aconventional navigation system, details will be omitted.

An operational example will be described next. First, a sequence example will be explained briefly, followed by the description of operational examples of the individual apparatuses.

Referring to Fig. 6, a sequence example will be explained. The following description will be given of a case where the on-board information device 41 requests, from content distribution device 21, content information that is information concerning content, and, after receiving the content information from the content distribution device 21, requests a license needed to output the content, using information included in the received content.

In Fig. 6, when a user wants to reproduce content, the user orders acquisition of content information using the input device 414. The content acquisition section 451 of the on-board information device 41 sends a content information request to the content distribution device 21 (S601). The content distribution device 21 reads information concerning the content from a memory device (not shown), and sends the information to the on-board information device 41 (S602).

Next, the license request section 452 of the on-board information device 41 sends a license request for the received content to the license management device 31 (S603). The license request section 452 additionally stores a content identifier included in the received content information, into the content identifier 501 in the content management table 461 in the memory device 413.

Upon reception of the license request from the on-board information device 41, the request receiving section 351 of the license management device 31 refers to the license management table 361 to determine whether the requested license has already been acquired or not. As the requested license has not been acquired here, the request receiving section 351 instructs the request transfer section 352 to transfer the license. In response to the instruction, the request transfer section 352 transmits the license request to the license issuing device 22 (S604).

The license issuing device 22 issues a license through a process similar to that performed conventionally, and transmits the license to the license management device (S605).

Upon reception of the license sent from the license issuing device 22, the license receiving section 353 of the license management device 31 stores the received license and the information on content for which the license is used in the license management table 361 and instructs the license transfer section 354 to perform a process. In response to the instruction, the license transfer section 354 transmits the license to the on-board information device 41 (S606).

It is assumed here that communication with the license management device 31 is not possible, due to the vehicle 4 exiting an area in which communication with the communication network 1 is possible, and that the vehicle 4 has failed to receive the license transmitted in S606. The license receiving section 454 of the on-board information device 41 stores information indicating non-acquisition of the license in the content management table 461.

The license re-request section 453 of the on-board information device 41 refers to the content management table 461 at a given timing to determine whether the requested license has been received or not. Because the requested license has not been received, the license re-request section 453 reads from the content management table 461 information indicating content whose license has not been received, and transmits a license request including information indicating the read content to the license management device 31 (S607).

The request receiving section 351 of the license management device 31 refers to the license management table 361 to determine whether the requested license has already been acquired or not in the same manner as described above.
As the requested license has been received, the request receiving section 351 instructs the license transfer section 354 to perform a process. In response to the instruction, the license transfer section 354 transmits the license to the on-board information device 41 (S608).

Operational examples of the individual apparatuses will be explained next.

First, an operational example of the on-board information device 41 will be explained.

The content acquisition section 451 of the on-board information device 41 has received content information transmitted from the content distribution device 21 in the manner described above. The content information includes content, a content identifier identifying the content, and information for acquiring a license for the content. The information for acquiring a license is, for example, URL (Uniform Resource Locator), or the like, preset to acquire the license. It is assumed here that the received content includes a content identifier "34UJ564E", and information for acquiring a license or URL "http:/ΔΔΔ.com/licence1.htm". The content information is stored in the memory device 413.

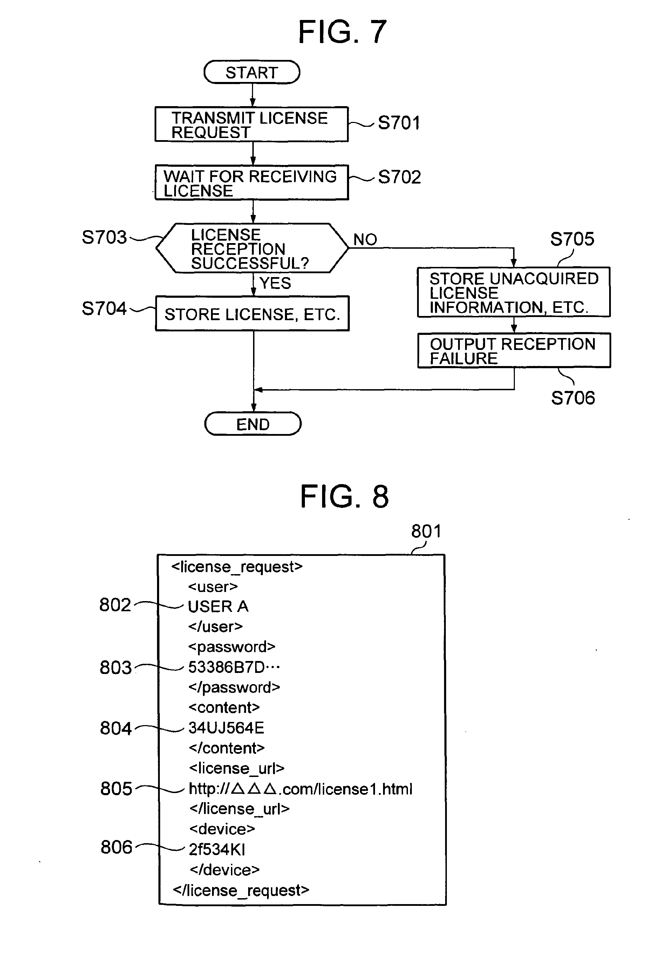

When receiving content information transmitted in the above-described manner, the license request section 452 is activated. The operation will be described referring to Fig. 7.

In Fig. 7, the license request section 452 transmits a license request to the request receiving section 351 of the license management device 31 (S701). Further, the license request section 452 stores information or the like indicating the content of the requested license in the content management table 461, and instructs the license receiving section 454 to receive the license. Specifically, when a license request with the content identifier "34UJ564E" is ordered, for example, the license request section 452 stores the content identifier "34UJ564E" in an area in the memory device 413 where the content identifier 501 or the like is to be stored. Further, the license request section 452 stores the content identifier "34UJ564E" in a predetermined area in the memory 412, designates the area to the license receiving section 454 and instructs the license receiving section 454 to receive the license.

One example of a license request is shown in Fig. 8. In Fig. 8, a license request 801 includes a user name 802, verification information 803, a content identifier 804, license acquire information 805, and terminal information 806. The user name 802 indicates the owner of the on-board information device 41. The verification information 803 is for verifying a user, and is a password, for example. The content identifier 804 is identification information on content. The license acquire information 805 is information for acquiring a license. Specifically, the license acquire information 805 is, for example, a URL, or the like, preset to acquire a license for the content indicated by the content identifier 804. The terminal information 806 is a value unique to the on-board information device 41.

The user name 802 and the verification information 803 are used to check if the user is authorized to use the license management device 31. This information should not necessarily be included in a license request. When the information is not included in a license request, the on-board information device 41, when connected to the communication network 1, may transmit the user name 802 and the verification information 803 to the license management device 31. Alternatively, other user verifying schemes such as bio-authentication information may be used.

Note that the license acquire information 805 used is a URL included in the content information already received.

Referring to Fig. 7, after the license request is transmitted in the above-described manner, the license receiving section 454 stands by until the license is received (S702). Next, the license receiving section 454 determines whether the process of receiving the requested license has been successful or not (S703). To make the determination, for example, the license receiving section 454 checks if the license has been received properly within a predetermined time since transmission of the license request from the license request section 452 or checks if information notifying a failure of reception of the license from the license management device 31 has been received or not.

When the result of the determination in S703 is that of a success in receiving the license, the license receiving section 454 stores the received license in the content management table 461 (S704). Specifically, when information, the content identifier "34UJ564E" and the license "E34RLK2Q", are received, the license receiving section 454 searches the content management table 461 in the memory device 413 for the content identifier 501 that matches the content identifier "34UJ564E", and stores the received license "E34RLK2Q" and "done" indicating that the license has been acquired, in the license 502 and acquisition status 503 corresponding to the content identifier 501.

When the result of the determination in S703 is a failure in receiving the license, the license receiving section 454 stores information indicating the failure of license reception in the content management table 461 (S705). Specifically, when the license request section 452 orders license reception, with the content identifier "34UJ564E" designated, the license receiving section 454 searches the content management table 461 in the memory device 413 for the content identifier 501 that matches the content identifier "34UJ564E", and stores information "-" indicating that the license has not been received, and "not done" indicating non-acquisition of the license, in the license 502 and acquisition status 503 corresponding to the content identifier 501.

Next, the license receiving section 454 notifies the output device 415 of the failure of reception of the license (S706).

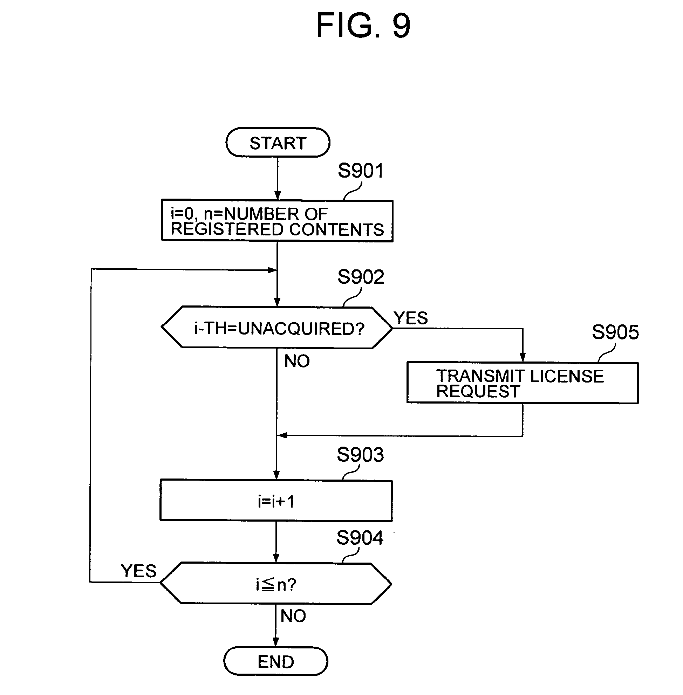

An operational example in which the on-board information device 41 reacquires a license whose reception has failed will be described referring to Fig. 9. The operation shown in Fig. 9 may be executed, for example, when the power is ON, when the power is OFF, every predetermined period of time, or every predetermined drive distance of the vehicle 4. The operation may be activated and executed every time connection of a communication circuit between the on-board information device 41 and the license management device 31 is established. To do so, for example, the on-board information device 41 may perform polling every predetermined period time or every predetermined drive distance, and may activate the operation to be described later when there is a response to the polling. The operation may be activated and executed by referring to preset hot spot information, or the like, every time the vehicle 4 enters a hot spot. To achieve this, for example, hot spot information or the like is stored in the map data in the memory device 413, and when it is determined that the current position of the vehicle 4 calculated by the current position calculating function is included in the hot spot, the operation to be described later may be activated.

In Fig. 9, the license re-request section 453 sets an initial value "i=0, n=number of contents registered" (S901). The number of contents registered is the number of combinations of content identifiers, licenses, acquired statuses, and the like, stored in the content management table 461. This number "n" is acquired as the license re-request section 453 counts the number of items registered in the content management table 461. Next, the license re-request section 453 reads an i-th acquired status 503, and determines whether the read information indicates non-acquisition of a license or not (S902). Specifically, it is determined whether or not the read acquired status 503 is "not done". When the read acquired status 503 is "not done", the license re-request section 453 determines that the license has not been acquired.

When the result of the determination in S902 shows that the license is not un-acquired, the license re-request section 453 increments "i" (S903), and determines whether or not "i ≤ n", i.e., determines whether or not a license has not been acquired for all information stored in the content management table 461 (S904). When the result of the determination in S904 does not indicate "i ≤ n", the license re-request section 453 performs the process of S902 again. When the result of the determination in S904 indicates "i ≤ n", the license re-request section 453 terminates the process.

When the result of the determination in S902 shows that the license has not been acquired, the license re-request section 453 transmits a license request (S905). Specifically, the license re-request section 453 reads the i-th content identifier 501 from the content management table 461, and terminal information, or the like, from the memory device 413, generates the license request 801 mentioned above, and transmits the license request 801 to the license management device 31. Next, an operational example of the license management device 31 will be described.

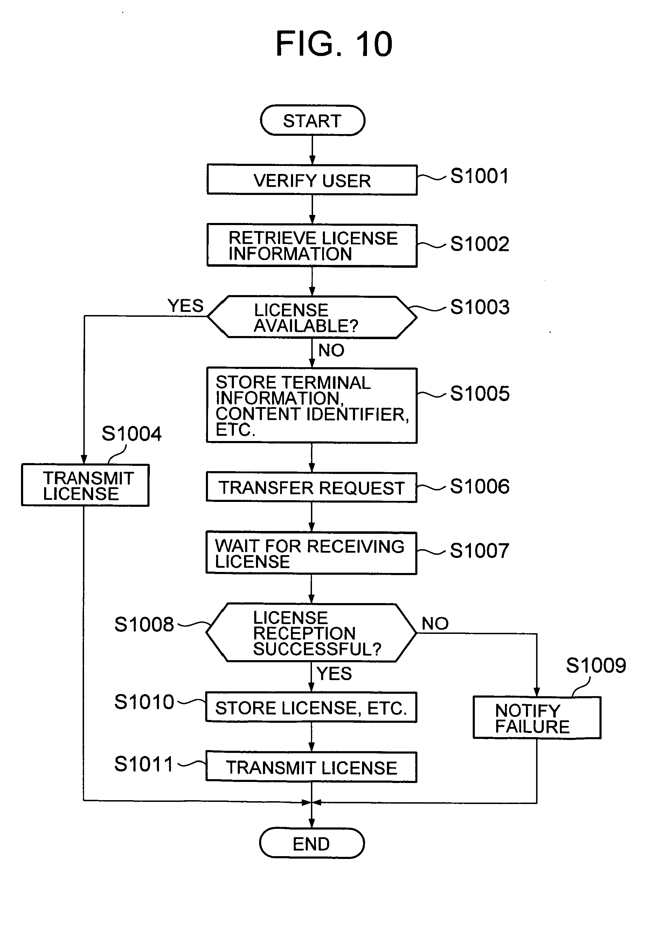

Fig. 10 shows a flowchart for a license acquire request transfer process in the license management device 31 upon reception of a license request. First, the request receiving section 351 verifies a user based on information included in the received license request (S1001). Specifically, for example, the request receiving section 351 extracts the user's name 802 and the verification information 803 from the license request 801, and performs user verification by checking if the combination of the extracted user name 802 and verification information 803 is included in a table, or the like, (not shown) stored in the memory device 313. This operation is the same as the conventional verification process. Next, the request receiving section 351 searches the license management table 361 for the requested license (S1002). Specifically, for example, the request receiving section 351 searches the individual rows in the license management table 361 for the combination of terminal information 301 and a content identifier 302 in a row which matches the combination of the terminal information 806 and the content identifier 804, exemplified in Fig. 8 and extracted from the license request 801, and retrieves information on the license 303 in the searched row.

Next, the request receiving section 351 determines whether the license has been retrieved in the process of S1002 or not (S1003).

When the result of the determination in S1003 shows that the proper license has been retrieved, the request receiving section 351 instructs the license transfer section 354 to perform a transfer process. In response to the instruction, the license transfer section 354 transmits the proper license to the on-board information device 41 (S1004). Specifically, for example, the request receiving section 351 reads the license 303 in the row searched in the aforementioned process, stores the license 303 in a predetermined area in the memory 312, and instructs the license transfer section 354 to perform the transfer process with that area designated. The license transfer section 354 reads the license 303 from the designated area in the memory 312, and transmits the license 303 together with the content identifier 302 to the on-board information device 41.

When the result of the determination in S1003 shows that there is no proper license, the request receiving section 351 stores the currently requested terminal information of the on-board information device 41, the content identifier in the currently requested license, and so forth, in the terminal information 301, the content identifier 302, and so forth, in the license management table 361 (S1005), and instructs the request transfer section 352 to transfer a license request. The request transfer section 352 transfers the license request sent from the on-board information device 41 to the license issuing device 22 (S1006), and instructs the license receiving section 353 to wait for reception of the license.

Specifically, for example, the request receiving section 351 adds the terminal information 806 "2f534KI", content identifier 804 "34UJ564E", and so forth, exemplified in Fig. 8 and extracted from the license request 801, to the terminal information 301, the content identifier 302, and so forth, in the license management table 361. In accordance with the license acquire information 805 extracted from the license request 801, the request transfer section 352 transmits the license request 801 to the license issuing device 22.

The license receiving section 353 stands by until reception of the license from the license issuing device 22 (S1007). The license receiving section 353 determines whether the process of receiving the requested license has been successful or not (S1008). To effect the determination, for example, the license receiving section 353 checks if the request transfer section 352 has received the license properly within a predetermined time from transfer of the license request.

When the result of the determination in S1008 shows that the license reception has failed, the license receiving section 353 transmits information indicating failure of license acquisition to the on-board information device 41 (S1009).

When the result of the determination in S1008 shows that the license reception has been successful, the license receiving section 353 stores the received license in the license management table 361 (S1010). Specifically, for example, the license receiving section 353 stores the received license "E34RLK2Q" in the license 303 in the row where the terminal information "2f534KI", the content identifier "34UJ564E", and so forth, are stored in the above-described process. Further, the license receiving section 353 instructs the license transfer section 354 to transmit the license. In response to the instruction, the license transfer section 354 transmits the received license, and the like (S1011).

Fee payment method for purchasing a license in the above-described process is discretionary. For example, a method of payment, such as by credit card number, may be included in the license request transmitted to the license issuing device 22, and may be settled by an apparatus (not shown). For example, a table, or the like, showing the method of payment, such as by credit card number, may be pre-stored in the memory device of the license issuing device 22 or the license management device 31, and may be settled using information read from the table upon reception of a license request. For example, a purchase history may be stored in the memory device of the license issuing device 22 or the license management device 31, and the bill for the license may be charged directly to a user's bank account or settled using a transfer sheet or the like later.

### Second Embodiment

A second embodiment will be explained next.

According to the first embodiment, when an on-board information device 41 can determine that a requested license has not been acquired, the on-board information device 41 transmits the license request again. The second embodiment to be described below is designed to deal with cases where the on-board information device 41 is damaged due to an accident, or the like, and a stored license is lost.

In a general DRM, a license for reproducing content is valid only to an apparatus that performs reproduction, or the like, of the license. According to a conventional DRM technique, when the license is lost due to the on-board information device 41 being damaged by an accident or the like, the license must be purchased again to reproduce the same content.

When a license is lost due to the on-board information device 41 being damaged in an accident, or the like, and the same user purchases a new on-board information device 41, the second embodiment eliminates the need for purchasing a new license for the new on-board information device 41 to reproduce the same content that was reproduced by the damaged on-board information device. According to the second embodiment, when the license held in the broken on-board information device 41 is requested for the new on-board information device 41, the license management device 31 gets a signature sent with the license request, and the license issuing device 22 issues and transmits a license for the new on-board information device 41 without any charge when the signature on the license request is valid.

The second embodiment to be described below differs from the first embodiment only in a portion of the configuration of the license issuing device 22, a portion of the configuration of the license management device 31 and a portion of the operation thereof. Therefore, similar reference numerals are given to those components which are the same as the corresponding components of the first embodiment to avoid repeating the description, and detailed descriptions are given concerning different components.. While operations of the second embodiment that are the same as those of the first embodiment will be explained briefly, different operations will be described in detail.

For the sake of descriptive convenience, an on-board information device 41 that is damaged is called an old on-board information device 41, and an on-board information device 41 newly purchased is called a new on-board information device 41.

The system configuration example of the second embodiment is the same as illustrated in Fig. 1.

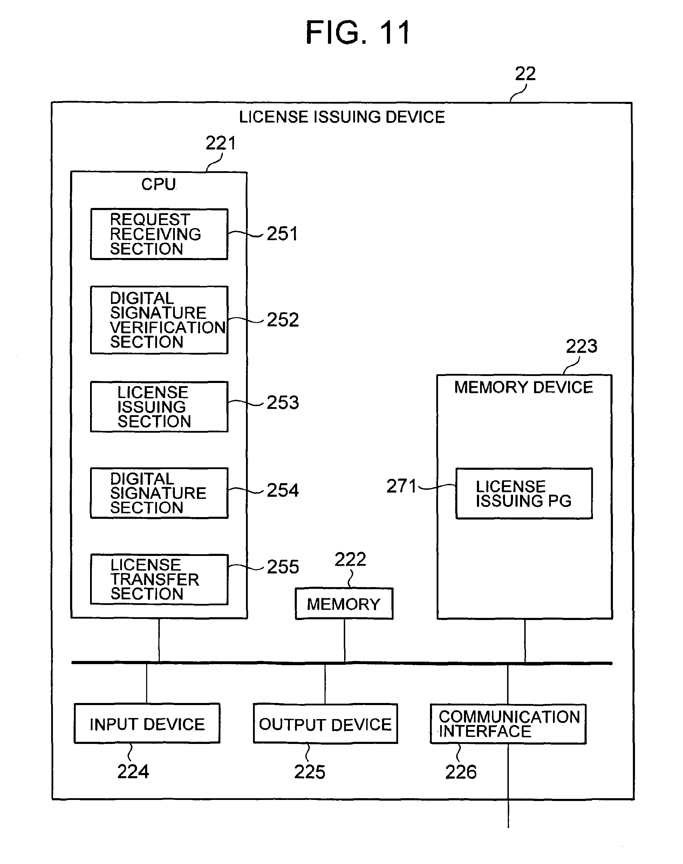

Fig. 11 is a diagram showing a configuration example of the license issuing device 22. Referring to Fig. 11, the license issuing device 22 has a CPU 221, a memory 222, a memory device 223, an input device 224, an output device 225, and a communication interface 226.

The memory device 223 is a HDD, or a writable and readable storage medium, such as a CD or DVD, and a storage medium drive unit. A license issuing PG 271, or the like, is stored in the memory device 223.

The input device 224 is, for example, a keyboard, a scanner, a mouse, or the like. The output device 225 is, for example, a display, a printer, a speaker, or the like. The license issuing device 22 is connected to the communication network 1 via the communication interface 226.

The CPU 221 executes the license issuing PG 271 loaded into the memory 222 to realize a request receiving section 251, a digital signature verification section 252, a license issuing section 253, a digital signature section 254, and a license transfer section 255. The request receiving section 251 receives a license issue request. The digital signature verification section 252 verifies an electronic signature provided with the license issue request. The license issuing section 253 issues a license. The digital signature section 254 provides an electronic signature unique to the license issuing device 22 with the issued license. The license transfer section 255 transmits the signed license.

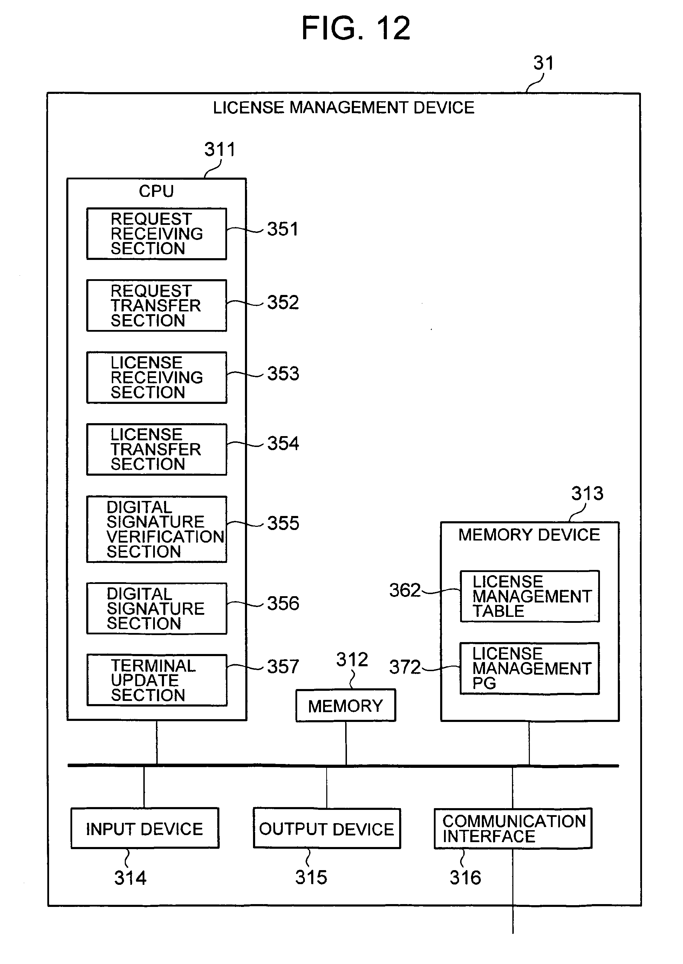

Referring to Fig. 12, the configuration example of the license management device 31 will be described. In Fig. 12, the license management device 31 of the second embodiment has a digital signature verification section 355, a digital signature section 356, and a terminal update section 357, in addition to the configuration example of the license management device 31 of the first embodiment. The license management device 31 of the second embodiment has a license management PG 372 and a license management table 362 in place of the license management PG 371 and the license management table 361 of the first embodiment.

The digital signature verification section 355 provides an electronic signature unique to the license management device 31 with the license request from the on-board information device 41. The digital signature section 356 verifies the electronic signature provided with the license received from the license issuing device 22. The terminal update section 357 updates the license management table 362.

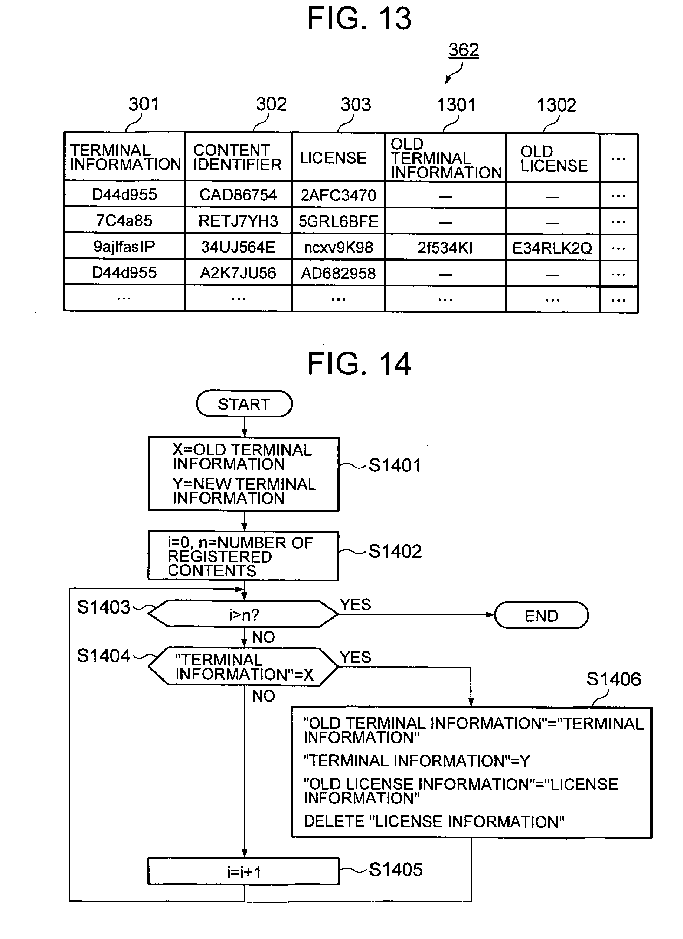

The license management table 362 will be described now. Fig. 13 shows an example of the license management table 362. In Fig. 13, the license management table 362 stores a terminal information 301, a content identifier 302, a license 303, an old terminal information 1301, an old license 1302, and the like. The terminal information 301, the content identifier 302, the license 303, the old terminal information 1301, the old license 1302, and the like, are associated with one another. The terminal information 301, the content identifier 302, and the license 303 are the same as those of the first embodiment. The old terminal information 1301 is information unique to the old on-board information device 41 that is damaged. The old license 1302 is a license held in the old on-board information device 41 that is damaged.

In the embodiment, the terminal information 301, the content identifier 302, the license 303, and so forth, in the license management table 362 are stored through the same operation as described above. The old terminal information 1301 and the old license 1302 are stored through an operation to be described later.

Operational examples will be described next.

When the old on-board information device 41 is damaged, the user brings the damaged old on-board information device 41 into the clearinghouse 3 or a company, a shop, or the like, asked by the clearinghouse 3 to check if the old on-board information device 41 is damaged. It is assumed that the user brings the old on-board information device 41 into the clearinghouse 3 having the license management device 31. When confirming that the old on-board information device 41 is damaged, a person working at the clearinghouse 3 supervises registration, on the license management device 31, of information of the damaged old on-board information device 41 and information of a new on-board information device 41 which is to be used in place of the old on-board information device 41.

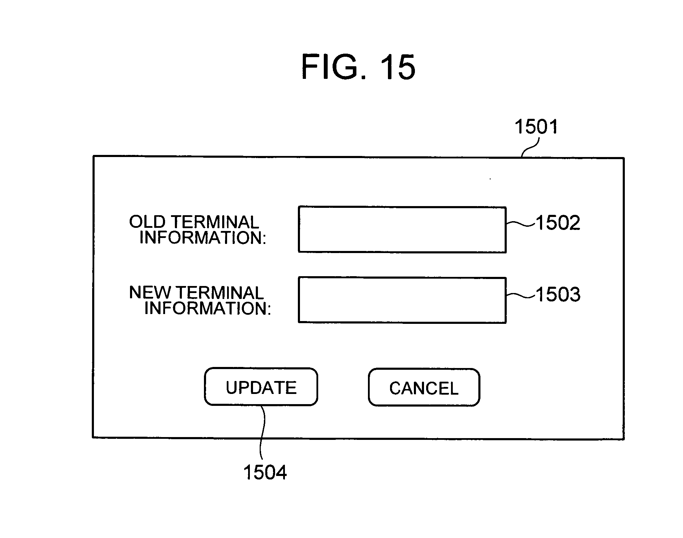

The terminal update section 357 of the license management device 31 accepts input of terminal information of the old on-board information device 41 and terminal information of the new on-board information device 41. To do so, the terminal update section 357 outputs a screen, or the like, exemplified in Fig. 15, to the output device 315, such as a display. In Fig. 15, a screen 1501 is displayed, for example, as the terminal update section 357 outputs image data, or the like, stored in the memory device 313, or the like, on the output device 315. The staff of the clearinghouse 3 inputs terminal information of the old on-board information device 41 and terminal information of the new on-board information device 41 to an area 1502 and an area 1503 using the input device 314, or the like, and depresses a button 1504 to instruct registration thereof.

The terminal information of the old on-board information device 41, and the terminal information of the new on-board information device 41 may be read from the memory devices 413 of the old on-board information device 41 and the new on-board information device 41, when the user brings the damaged old on-board information device 41 and the new on-board information device 41 into the clearinghouse 3. In cases where the on-board information device 41 has been manufactured or sold by the clearinghouse 3, the clearinghouse 3 may pre-register the terminal information of the on-board information device 41 in a database, or the like, and may read terminal information from the data bas, or the like, when the user purchases a new on-board information device 41 due to the old on-board information device 41 being damaged.

When the terminal information of the old on-board information device 41 and the terminal information of the new on-board information device 41 are input and registration thereof is ordered, the terminal update section 357 performs an operation exemplified in Fig. 14. In Fig. 14, the terminal update section 357 first sets the input terminal information of the old on-board information device 41 as a variable X, and then sets the input terminal information of the new on-board information device 41 as a variable Y (S1401). Next, the terminal update section 357 sets an initial value "i = 0, n = number of content items registered" (S1402). This operation example is the same as the one discussed earlier. Next, the terminal update section 357 determines whether "i > n", i.e., whether a process to be discussed later has been performed for all the rows in the license management table 362 or not (S1403).

When the result of the determination in S1403 is "i > n", the terminal update section 357 terminates the process.

When the result of the determination in S1403 is not "i > n", the terminal update section 357 reads i-th terminal information 301 from the license management table 362 in the memory device 313, and determines whether or not the read terminal information matches the information set as the variable X or the terminal information of the old on-board information device 41 (S1404).

When the result of the determination in S1404 does not indicate a match, the terminal update section 357 increments "i" II (S1405), and performs the process of S1403 again.

When the result of the determination in S1404 indicates a match, the terminal update section 357 moves the terminal information 301 and the license 303 in the i-th row in the license management table 362 to the old terminal information 1301 and the old license 1302 in the same row, and stores the information set as the variable Y or the terminal information of the new on-board information device 41 as new terminal information 301. Further, the terminal update section 357 deletes the license 303 in the i-th row in the license management table 362 (S1406).

When the old on-board information device 41 is damaged, the license management table 362 is updated this way.

Next, an operational example until when the new on-board information device 41 acquires a license will be described.
It is assumed that a content identifier and information about whether a license for the content indicated by the content identifier has been acquired or not, i.e., the content identifier 501 and information on the acquisition status 503, are stored in the content management table 461 of the memory device 413 as done in the license management table 362. The content identifier 501 and the information concerning the acquisition status 503 in the content management table 461 may be stored through the same operation as explained earlier, or when the content identifier 501 and the information on the acquisition status 503 can be read from the content management table 461 of the old on-board information device 41, the content management table 461 read out may be copied. As mentioned above, a license for content permits the content to be reproduced only by an apparatus which reproduces the content. If the content management table 461 is copied into the new on-board information device 41, therefore, the license 502 in the content management table 461 should be deleted and the acquisition status 503 therein should be set to "not done".

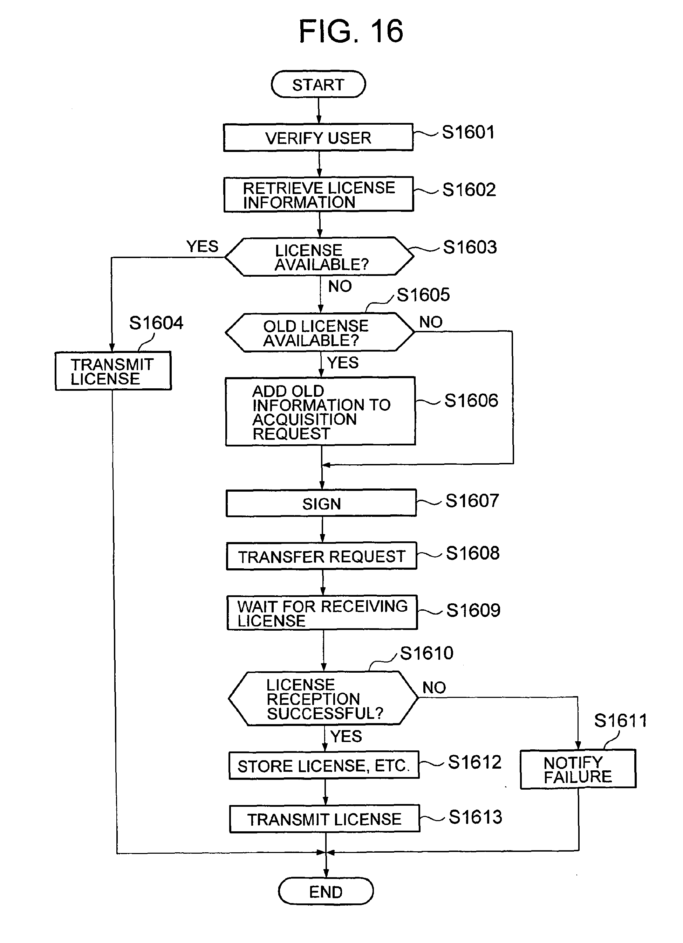

The new on-board information device 41 transmits a license request to the license management device 31 through the same operation as explained above. An operational example of the license management device 31 which has received a license request will be explained referring to Fig. 16.

In Fig. 16, the request receiving section 351 verifies the user based on information included in the received license request (S1601). Because this operation is the same as the one described above, a specific example thereof will be omitted. Next, the request receiving section 351 searches the license management table 362 for the requested license (S1602). Specifically, for example, the request receiving section 351 searches the individual rows in the license management table 362 for the combination of terminal information 301 and a content identifier 302 in a row which matches the combination of the terminal information 806 and content identifier 804 extracted from the license request 801, and retrieves the license 303 and the old license 1302 in the searched row. Next, the request receiving section 351 determines whether the license 303 has been retrieved in the process of S1602 or not (S1603).

When the result of the determination in S1603 shows that the proper license 303 has been retrieved, the request receiving section 351 instructs the license transfer section 354 to perform a transfer process. In response to the instruction, the license transfer section 354 transmits the proper license to the on-board information device 41 (S1604). Because this operation is the same as the one described above, a specific example thereof will be omitted.

When the result of the determination in S1602 shows that there is no proper license 303, the request receiving section 351 determines whether the old license 1302 has been retrieved in the process of S1602 or not (S1605).

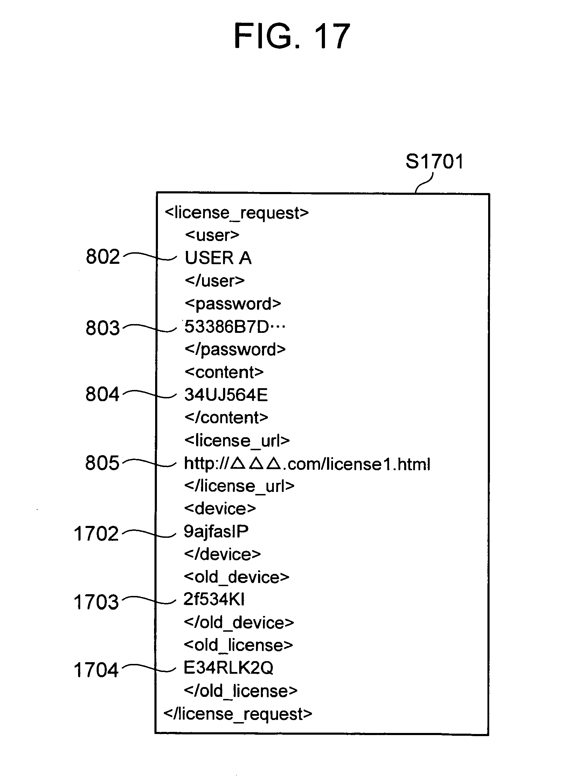

When the result of the determination in S1605 shows that the proper old license 1302 has been retrieved, the request receiving section 351 instructs the request transfer section 352 to generate a license request including old information. In response to the instruction, the request transfer section 352 generates the license request by adding the terminal information of the old on-board information device 41, the old license, and the like, to the license request transmitted from the on-board information device 41 (S1606). Specifically, for example, the request receiving section 351 reads the old terminal information 1301 and the old license 1302 in the row where the old license 1302, retrieved in the determination process of S1605, is stored, stores the read information in a predetermined area in the memory 322, and instructs the request transfer section 352 to generate a license request. The request transfer section 352 reads the information from the predetermined area in the memory 322, and generates a license request 1701, as exemplified in Fig. 17. In Fig. 17, the license request 1701 includes a user name 802, verification information 803, a content identifier 804, license acquire information 805, new terminal information 1702, old terminal information 1703, and an old license 1704. The user name 802, the verification information 803, the content identifier 804, and the license acquire information 805 are the same as those mentioned above. The new terminal information 1702 is the terminal information of the new on-board information device 41. The old terminal information 1703 is the terminal information of the old on-board information device 41. The old license 1704 is the license that is used by the old on-board information device 41. The old terminal information 1703 and the old license 1704 in the license request 1701 are the old terminal information 1301 and the old license 1302 in the row where the old license retrieved in the determination process of S1605 is stored, and are old information added by the request transfer section 352.

Next, the terminal update section 357 provides a conventional electronic signature with the license request (S1607). This electronic signature is not particularly restrictive, but may be, for example, a digital signature which encrypts a text, or the like, with a private key. The terminal update section 357 instructs the request transfer section 352 to transfer the license request. Because the subsequent operation is the same as the one described above, a specific example thereof will be omitted.

The request transfer section 352 transmits the license request with the electronic signature to the license issuing device 22 (S1608), and instructs the license receiving section 353 to stand by for reception of the license.

The license receiving section 353 stands by until the license receiving section 353 receives the license from the license issuing device 22 (S1609). The license receiving section 353 determines whether the process of receiving the requested license has succeeded or not (S1610).

When the result of the determination in S1610 is a failure in license reception, the license receiving section 353 transmits information indicating the failure in acquiring the license to the on-board information device 41 (S1611).

When the result of the determination in S1610 is a successful license reception, the license receiving section 353 stores the received license in the license management table 362 (S1612). Further, the license receiving section 353 instructs the license transfer section 354 to transmit the license. In response to the instruction, the license transfer section 354 transmits the received license (S1613).

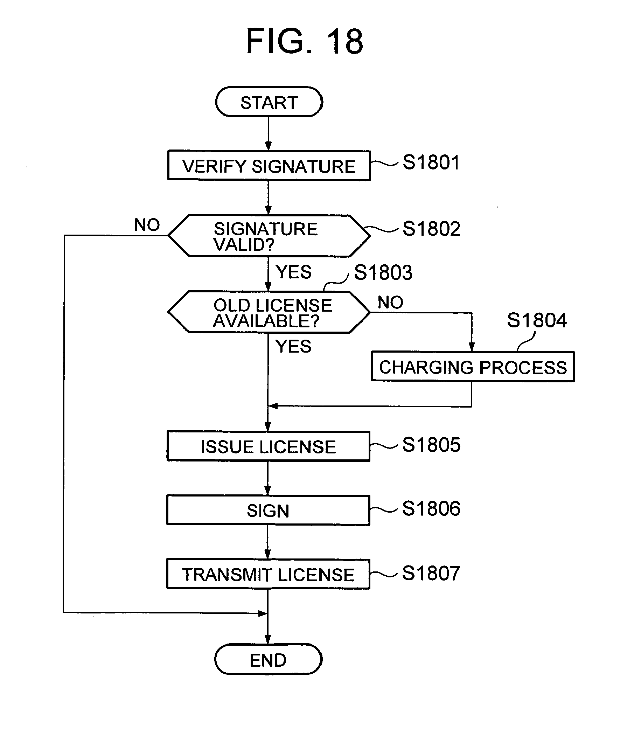

An operational example of the license issuing device 22 which has received a license request from the license management device 31 will be explained referring to Fig. 18. The operational example is a conventional license issuance to which are added an operation of verifying an electronic signature provided with the received license request and an operation of determining whether or not an old license is included in the license request.

In Fig. 18, the request receiving section 251 verifies an electronic signature put to the received license request (S1801). When the verification result indicates that the signature is invalid (S1802), the request receiving section 251 terminates the process. When the verification result indicates that the signature is valid (S1802), the request receiving section 251 determines whether old terminal information and an old license are included in the license request or not (S1803). Specifically, for example, the request receiving section 251 determines whether the old terminal information 1703 and the old license 1704 are included in the license request 1701 or not. The determination may include a process of verifying if the electronic signature provided with the old license is done by the license issuing device 22.

When the result of the determination in S1803 shows that the old terminal information and the old license are not included in the license request, the license issuing section 253 performs a fee-charging process (S1804). Even with the old terminal information and the old license included in the license request, if the old license is not signed by the license issuing device 22, the license issuing section 253 may perform a fee-charging process. The charging process may be optional in terms of payment method and is not particularly prescribed, as mentioned above.

Next, the license issuing section 253 issues a license for the new on-board information device 41 based on the terminal information and the content identifier extracted from the license request (S1805), and instructs the digital signature section 254 to perform processing. The digital signature section 254 provides an electronic signature with the issued license (S1806), and instructs the license transfer section 255 to perform a transfer process. The license transfer section 255 transmits the signed license to the license management device 31 (S1807).

The license transmitted to the license management device 31 is stored in the license management table 362 through the same operation as described above, and is transferred to the on-board information device 41.

Accordingly, when the new on-board information device 41 sends a request to acquire a license and the old on-board information device 41 has acquired the license with regard to the content of the license, it is possible to issue the license for the new on-board information device 41 again without charging. When the old on-board information device 41 has not acquired the license, the license is issued with a charge in the same manner as done in the first embodiment. This license is recorded in the license management device 31 together with an electronic signature of the license issuing device 22 provided with the license.

### Third Embodiment

A third embodiment will be explained next.

The third embodiment is designed for cases where in acquiring a license for the same content, there is a purchase method capable of issuing a license once with a single charge and a purchase method capable of issuing a license multiple times with a single charge.

When requesting content information and purchasing a license for the first time, a user can purchase the license by a method capable of issuing a license multiple times with a single charge. However, a description will be given below of a case where a license is purchased first by the method capable of issuing a license once with a single charge, and after purchase, the method is changed to the method capable of issuing a license multiple times with a single charge. When the on-board information device 41 is damaged after such a transition, the user brings the old on-board information device 41 damaged into the clearinghouse 3 having the license management device 31, as explained in the foregoing description of the second embodiment. When confirming that the old on-board information device 41 is damaged, staff working at the clearinghouse 3 directs the license management device 31 to register information of the damaged old on-board information device 41 and information on a new on-board information device 41 which is to be used in place of the old on-board information device 41. At this time, the license management device 31 registers information concerning a license which has been purchased by the method capable of issuing a license multiple times with a single charge, in the same manner as done in the second embodiment, and deletes information concerning a license which has been purchased by the method capable of issuing a license once with a single charge.

The third embodiment to be described below differs from the second embodiment in a portion of the configuration of the license management device 31, a portion of the configuration of the on-board information device 41, and a portion of the operation thereof. Therefore, similar reference numerals are given to those components which are the same as the corresponding components of the second embodiment to avoid repeating the description, and detailed descriptions will be given for different components. While operations of the third embodiment that are the same as those of the second embodiment will be explained briefly, operations that are different will be described in detail.

The system configuration example of the third embodiment is the same as illustrated in Fig. 1.

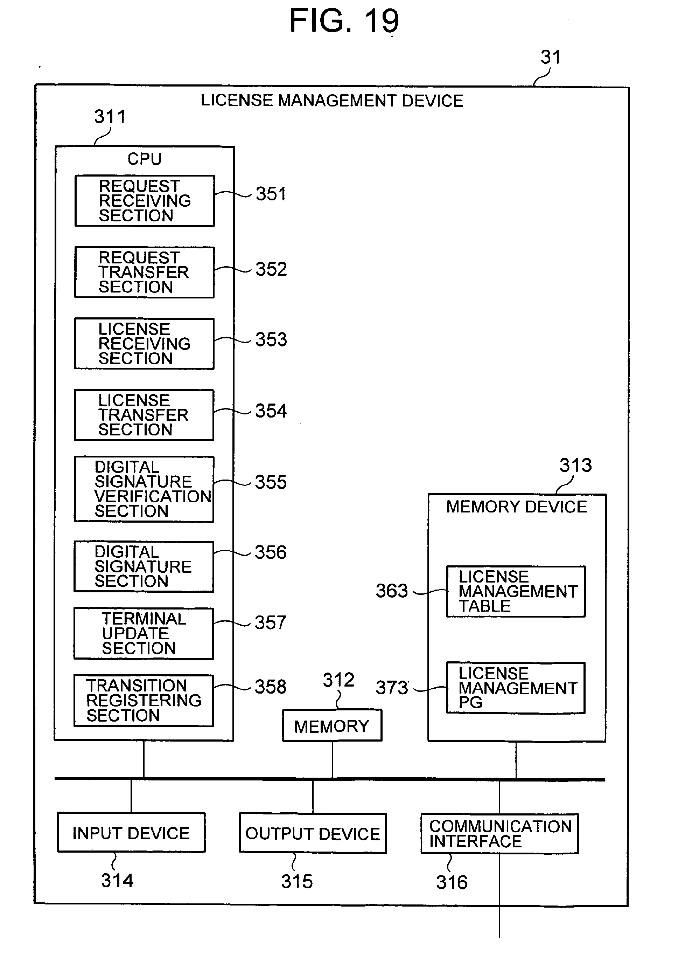

Referring to Fig. 19, the configuration example of the license management device 31 will be described. In Fig. 19, the license management device 31 of the third embodiment has a transition registering section 358 in addition to the configuration example of the license management device 31 of the second embodiment. The license management device 31 of the third embodiment has a license management PG 373 and a license management table 363 in place of the license management PG 372 and the license management table 362 of the license management device 31 of the second embodiment.

When the on-board information device 41 is damaged, the transition registering section 358 registers information, in the license management table 363, on the transition of the license for the content, that was reproduced by the old on-board information device 41, to the new on-board information device 41.

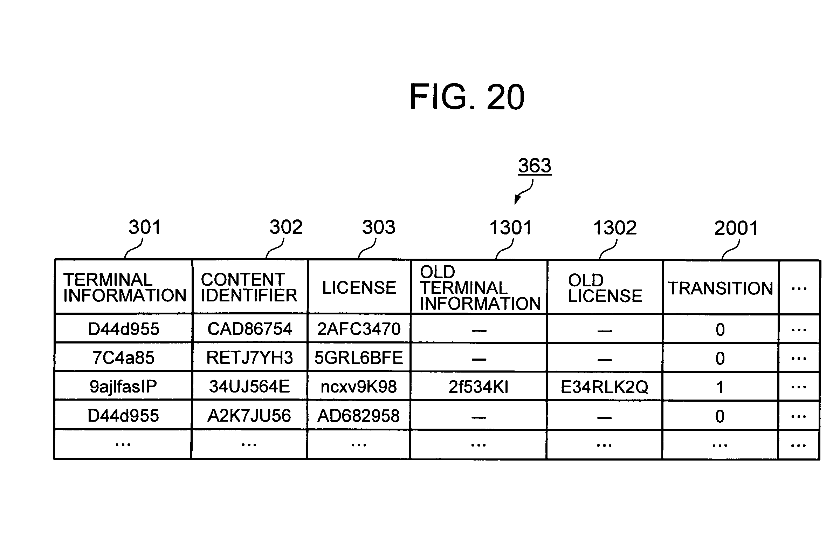

The license management table 363 will be described now. Fig. 20 shows an example of the license management table 363. In Fig. 20, the license management table 363 stores terminal information 301, a content identifier 302, a license 303, old terminal information 1301, an old license 1302, a transition 2001, and the like. The terminal information 301, the content identifier 302, the license 303, the old terminal information 1301, the old license 1302, the transition 2001, and the like, are associated with one another. The terminal information 301, the content identifier 302, the license 303, the old terminal information 1301, and the old license 1302 are the same as those of the second embodiment. The transition 2001 is information indicating whether the license for the content indicated by the corresponding content identifier 302 is to be purchased by the method capable of issuing a license once with a single charge, or by the method capable of issuing a license multiple times with a single charge. In the example of Fig. 20, the transition 2001 of "0" indicates the purchase method capable of issuing a license once with a single charge, and the transition 2001 of "1" indicates the purchase method capable of issuing a license multiple times with a single charge.

In the embodiment, the terminal information 301, the content identifier 302, the license 303, and so forth, in the license management table 363 are stored through the same operation as described above. The old terminal information 1301, the old license 1302, and the transition 2001 are stored through an operation to be described later.

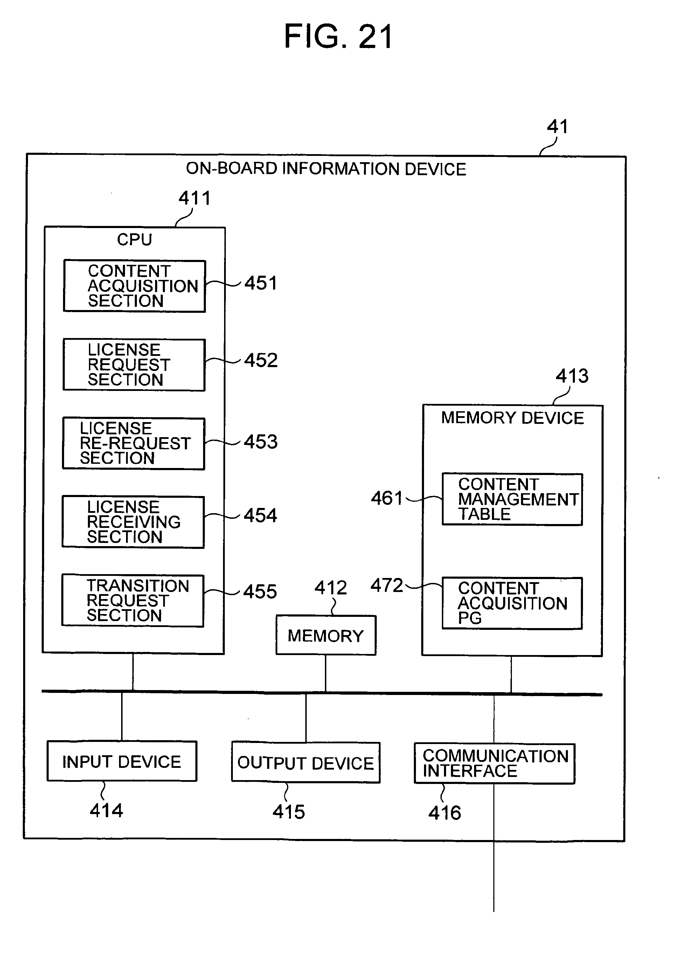

A configuration example of the on-board information device 41 will be explained referring to Fig. 21. In Fig. 21, the on-board information device 41 of the third embodiment has a transition request section 455 in addition to the configuration example of the on-board information device 41 of the first or second embodiment. The on-board information device 41 of the third embodiment has a content acquisition PG 472 in place of the content acquisition PG 471 of the on-board information device 41 of the first or second embodiment.

The transition request section 455 requests transition of a license purchased by the method capable of issuing a license once with a single charge to a license purchased by the method capable of issuing a license multiple times with a single charge.

Operational examples will be explained below.

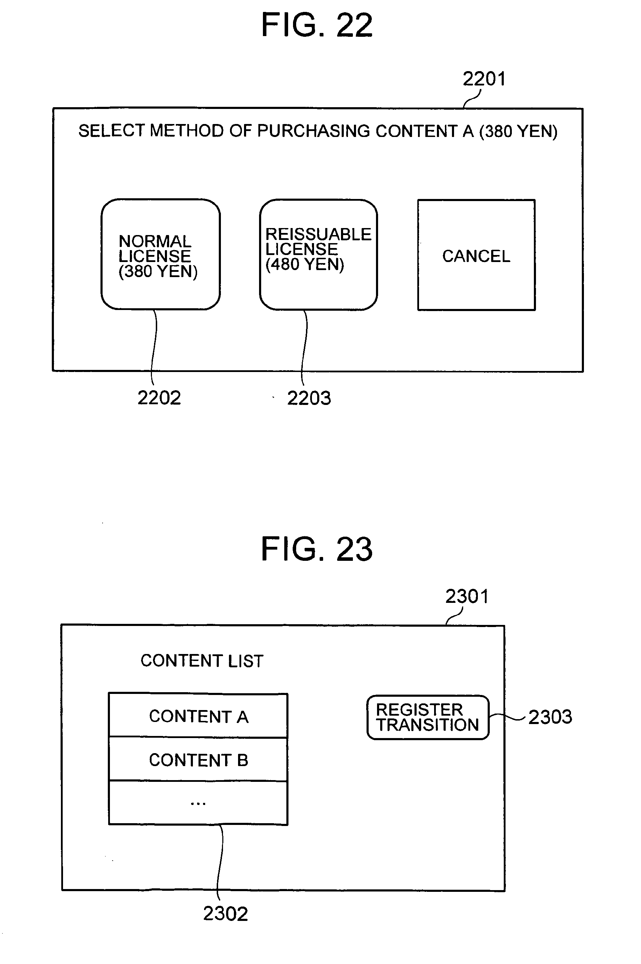

A user purchases a license for reproducing content in the manner described above. At that time, the license request section 452 of the on-board information device 41 outputs a screen example 2201 as exemplified in Fig. 22 to the output device 415, such as a display, based on screen data transmitted from the content distribution device 21 or screen data stored in the memory device 413. When the user presses a button 2202 using the input device 414, the license request section 452 transmits a license request including information indicating that a license is to be purchased by the method capable of issuing a license once with a single charge. When the user presses a button 2203 using the input device 414, the license request section 452 transmits a license request including information indicating that a license is to be purchased by the method capable of issuing a license multiple times with a single charge.

It is assumed that the license request section 452 has transmitted a license request including information indicating that a license is to be purchased by the method capable of issuing a license once with a single charge. In this case, the license management device 31 transfers the license request, stores the license, and the like, transmitted from the license issuing device 22 in the license management table 363, and transmits the license to the on-board information device 41 through the same operation as explained above. At this time, "0" indicating that a single license is issued with a single charge is stored in the transition 2001 in the license management table 363. The operation of the on-board information device 41 for receiving the license transmitted from the license management device 31 is the same as explained above.

When a license request, including information indicating that a license is to be purchased by the method capable of issuing a license multiple times with a single charge, is transmitted, the license receiving section 353 stores "1" in the transition 2001 in the license management table 363.

Next, the user requests transition of the license purchased by the method capable of issuing a license multiple times with a single charge to a license to be purchased by the method capable of issuing a license multiple times with a single charge. To effect the request, for example, the transition request section 455 of the on-board information device 41 outputs a screen example 2301 as exemplified in Fig. 23 to the output device 415, such as a display. The screen example 2301 is displayed based on screen data transmitted from the content distribution device 21 or screen data stored in the memory device 413. In Fig. 23, a content list 2302 is displayed on the screen example 2301. Information for displaying the content list 2302 may be displayed according to the content identifier 501 read from the content management table 461 by the transition request section 455, or may be displayed according to the content identifier 303 read from the license management table 363 and transmitted by the transition registering section 358 of the license management device 31. The user selects one content item from the content list 2302, and presses a button 2303 to request license transition.

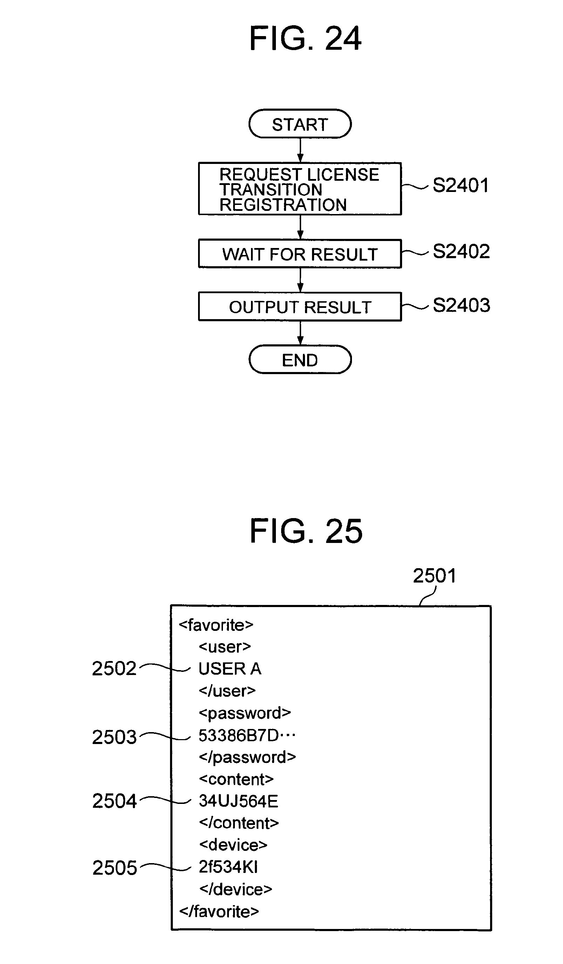

Referring to Fig. 24, an operational example of the on-board information device 41 when license transition is requested will be explained.

When license transition is designated in the above-described manner, the transition request section 455 transmits a license transition registration request to the license management device 31 (S2401). An example of the license transition registration request to be transmitted then is shown in Fig. 25. In Fig. 25, a message 2501 includes a user name 2502, verification information 2503, a content identifier 2504, and terminal information 2505. The user name 2502 shows the owner of the on-board information device 41. The verification information 2503 is for verifying a user. The content identifier 2504 is identification information of content for which the license purchase method is to be changed. The terminal information 2505 is a value unique to the on-board information device 41.

In Fig. 24, after transmitting the license transition registration request in the mentioned manner, the transition request section 455 stands by until reception of the result of the transition request (S2402). Next, the transition request section 455 outputs the received result of the transition request to the output device 415 as a sound, an image, or the like (S2403).

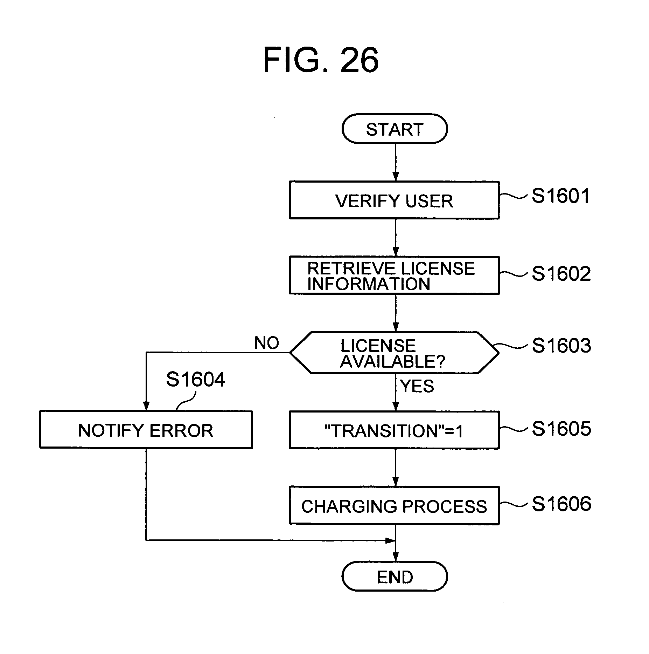

Next, an operational example of the license management device 31 which has received the license transition registration request will be explained referring to Fig. 26.

In Fig. 26, the transition registering section 358 of the license management device 31 verifies the user based on information included in the received license transition registration request (S2601). The operational example is the same as explained above. The transition registering section 358 then searches the license management table 363 for the license whose transition registration has been requested (S2602). Specifically, for example, the transition registering section 358 searches the individual rows in the license management table 363 for the combination of terminal information 301 and a content identifier 302 in a row which matches the combination of the terminal information 2505 and content identifier 2504 extracted from the message 2501, and retrieves information on the license 303 in the searched row.

Next, the transition registering section 358 determines whether the license has been retrieved in the process of S2602 or not (S2603).

When the result of the determination in S2603 shows that there is no proper license 303, the transition registering section 358 transmits information indicating an error to the on-board information device 41 which has transmitted the license transition registration request (S2604).

When the result of the determination in S2603 shows that the proper license has been retrieved, the transition registering section 358 stores information indicating that a license can be issued multiple times with a single charge is stored in the license management table 363 (S2605). Specifically, for example, the transition registering section 358 overwrites information "1" indicating multiple issuances with a single charge are possible, in the transition 2001 corresponding to the terminal information 301 and content identifier 302 retrieved from the license management table 363 through the above-described process. Next, the transition registering section 358 performs a charging process (S2606). Payment method of the charge for the license transition is discretionary, as mentioned earlier.

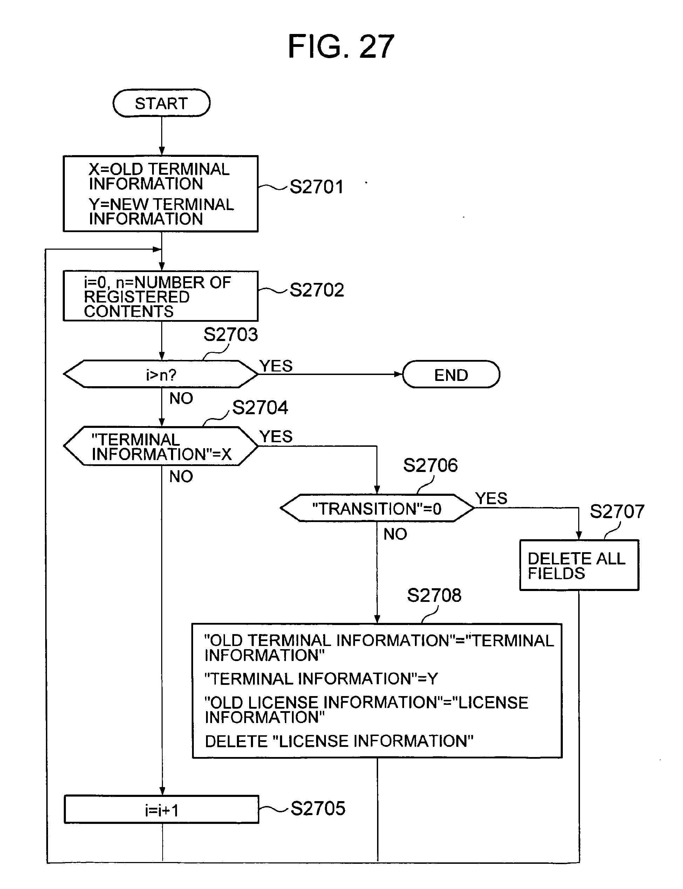

Suppose that after the transition process is performed in the above-described manner, the on-board information device 41 is damaged. As mentioned above, the user brings the damaged old on-board information device 41 into the clearinghouse 3 having the license management device 31. When confirming that the old on-board information device 41 is damaged, staff working at the clearinghouse 3 directs the license management device 31 to register information of the damaged old on-board information device 41 and information on a new on-board information device 41, which is to be used in place of the old on-board information device 41. An operational example of the license management device 31 in making this process will be explained referring to Fig. 27.

As described above, when the terminal information of the old on-board information device 41 and the terminal information of the new on-board information device 41 are input and registration thereof is ordered, the terminal update section 357 first sets the input terminal information of the old on-board information device 41 as a variable X, and then sets the input terminal information of the new on-board information device 41 as a variable Y (S2701). Next, the terminal update section 357 sets an initial value "i = 0, n = number of contents registered" (S2702). This operation example is the same as the one discussed earlier. Next, the terminal update section 357 determines whether "i > n", i.e., whether a process to be discussed later has been performed for all the rows in the license management table 363 or not (S2703).

When the result of the determination in S2703 is "i > n", the terminal update section 357 terminates the process.

When the result of the determination in S2703 is not "i > n", the terminal update section 357 reads the i-th terminal information 301 from the license management table 363, and determines whether or not the read terminal information matches the information set as the variable X or the terminal information of the old on-board information device 41 (S2704).

When the result of the determination in S2704 is not a match, the terminal update section 357 increments "i" (S2705), and performs the process of S2703 again.

When the result of the determination in S2704 is a match, the terminal update section 357 reads an i-th transition 2001 in the license management table 363 in the memory device 313, and determines whether the read information indicates that a single license issuance with a single charge is possible or not, i.e., whether the transition 2001 is "0" or not (S2606).

When the result of the determination in S2606 shows that the transition 2001 is "0", the terminal update section 357 deletes all information in the i-th row in the license management table 363.

When the result of the determination in S2607 shows that the transition 2001 is not "0", the terminal update section 357 moves the terminal information 301 and the license 303 in the i-th row in the license management table 363 to the old terminal information 1301 and the old license 1302 in the same row, and stores the information set as the variable Y or the terminal information of the new on-board information device 41 as new terminal information 301. Further, the terminal update section 357 deletes the license 303 in the i-th row in the license management table 363 (S2708).

When the old on-board information device 41 is damaged, the license management table 363 is updated this way.

Thereafter, the on-board information device 41 transmits the license request to the license management device 31 as described above. The license management device 31 requests a license as done in the second embodiment.

Accordingly, when the user has purchased a license which ensures multiple license issuances with a single charge, the user can acquire a license for the new on-board information device 41 without new payment. When the user has purchased a license which ensures a single license issuance with a single charge, information on the license stored in the license management table 363 can be deleted.

When the user has purchased a license which ensures multiple license issuances with a single charge from the beginning, clearly the user can acquire a license for the new on-board information device 41 without re-paying, and without performing the above-described transition process.

Although the detailed descriptions of the embodiments have been given referring to the accompanying drawings, specific configurations are not limited to those of the embodiments and design modifications can be made within the scope of the invention.

For example, the license management device stores a license itself in the embodiments, but the embodiment are limited thereto, and an encrypted license and a key for decrypting the license may be stored in association with each other.

Although the embodiments re-transmit a license request from the on-board information device 41 in consideration of the process load in the license management device, this is not restrictive. For example, when license transmission/reception fails, the license management device may repeatedly transmit a license.

In the second embodiment, an electronic signature put on a license which is issued by the license issuing device proves that a user has purchased the license. Further, an electronic signature put on a license request by the license management device proves that an old on-board information device is damaged and a new license management device is purchased. However, those proving schemes are not restrictive. If the DRM technique provides some means capable of giving such proofs without using the publicly known electronic signature technique, for example, electronic-signature oriented proofs are not necessary.

Although the license management device transmits a license request to the license issuing device with a license request from a new on-board information device as a trigger in the second and third embodiments, the invention is not limited to this mode. For example, when the update process of the license management table is performed, re-issuance of all or some licenses may be requested.

Although a user selects a method capable of issuing a license once with a single charge or a method capable of issuing a license multiple times with a single charge at the time of purchasing a license in the third embodiment, the invention is not limited to this mode. For example, conditions may be preset, and an on-board information device may select a method capable of issuing a license once with a single charge or a method capable of issuing a license multiple times with a single charge depending on whether content satisfies the conditions. The conditions include, for example, the cost of a license for reproducing content the type of content (music, moving pictures, or still images) or the like.

At the time of purchasing a license, a license may be purchased once, and content may be reproduced several times, after which transition and registration of the license for content that the used likes may be done, instead of selecting a method capable of issuing a license once with a single charge or a method capable of issuing a license multiple times with a single charge. In this case, the on-board information device may store the number of times the content has been reproduced in the memory device, and the transition process may be performed when the number becomes equal to or greater than a threshold.

## Claims

1. A navigation system connected over a communication network to an issuing device which issues a license for content in response to a license request, and to a management device, which, when a license requested is not stored in a memory device, transfers said license request to said issuing device and stores a license sent in response to said license request into said memory device, and when said license requested is stored in said memory device, reads and transmits said license, said navigation system comprising:
request means which transmits said license request to said management device;
an acquired status memory device;
reception means which receives said license sent from said management device; and
storage means which stores information indicating whether or not said license has been received in said acquired status memory device,
wherein when information read from said acquired status memory device indicates that said license is not received, said license request is resent to said management device.

2. The navigation system according to claim 1, further comprising:
a map memory device which stores a map including information on an area in which communication with said management device is possible; and
calculation means which calculates a current position of said navigation system,
wherein when it is determined whether or not communication with said management device is possible from said calculated current position and said map, and, with communication with said management device possible, said information read from said acquired status memory device indicates that no license is received, said license request is resent to said management device.

3. A management device connected over a communication network to a navigation system that transmits a license request, and to an issuing device that issues and transmits a license for content in response to said license request, said management device comprising:
request reception means which receives a license request sent from said navigation system;
transfer means which transfers said received license request to said issuing device;
reception means which receives a license sent from said issuing device;
a management information memory device;
storage means which stores said received license in said management information memory device; and
transmission means which transmits said received license to said navigation system,
wherein when a license requested by said received license request is not stored in said management information memory device, said license request is transferred, and when said license requested by said received license request is stored in said management information memory device, said license is read and said read license is transmitted to said navigation system.

4. A license management system in which a navigation system, an issuing device which issues and sends a license for content in response to a license request, and a management device are connected over a communication network, said navigation system comprising:
request means which transmits said license request to said management device;
an acquired status memory device;
first reception means which receives said license sent from said management device; and
storage means which stores information indicating whether or not said license has been received in said acquired status memory device,
said management device comprising:
request reception means which receives a license request sent from said navigation system;
transfer means which transfers said received license request to said issuing device;
second reception means which receives said license sent from said issuing device;
a management information memory device;
storage means which stores said received license in said management information memory device; and
transmission means which transmits said received license to said navigation system,
wherein when information read from said acquired status memory device indicates that said license is not received, said navigation system resends said license request to said management device, and
when a license requested by said received license request is not stored in said management information memory device, said management device transfers said license request, and when said license requested by said received license request is stored in said management information memory device, said management device reads said license and transmits said read license to said navigation system.

5. The license management system according to claim 4,
wherein said navigation system further comprises:
a map memory device which stores a map including information of an area in which communication with said management device is possible; and
calculation means which calculates a current position of said navigation system,
wherein when it is determined whether or not communication with said management device is possible, from said calculated current position and said map, and, with communication with said management device possible, said information read from said acquired status memory device indicates that no license is received, said license request is resent to said management device.

6. A license acquiring method which is executed by a navigation system connected over a communication network to an issuing device which issues a license for content in response to a license request, and a management device, which, when a license requested is not stored in a memory device, transfers said license request to said issuing device and stores a license, sent in response to said license request, into said memory device, and when said license requested is stored in said memory device, reads and transmits said license, said license acquiring method executing:
a license request step which transmits said license request to said management device;
a license acquired status storage step which stores information indicating whether or not said license sent by said management device has been received in an acquired status memory device,
wherein when information read from said acquired status memory device indicates that said license is not received, said license request is resent to said management device.

7. A license acquiring program which is readable by a navigation system connected over a communication network to an issuing device which issues a license for content in response to a license request, and a management device, which, when a license requested is not stored in a memory device, transfers said license request to said issuing device and stores a license, sent in response to said license request, into said memory device, and when said license requested is stored in said memory device, reads and transmits said license, said license acquiring program comprising:
a license request step which transmits said license request to said management device;
a license acquired status storage step which stores information indicating whether or not said license sent by said management device has been received in an acquired status memory device,
wherein when information read from said acquired status memory device indicates that said license is not received, said license request is resent to said management device.
